# EUROPÄISCHE PATENTSCHRIFT

(11) **EP 0 847 340 B1**
(45) Veröffentlichungstag und Bekanntmachung des Hinweises auf die Patenterteilung: **29.08.2001**
(21) Anmeldenummer: 97931801.1
(22) Anmeldetag: 09.07.1997
(51) Int. Cl.: B60N 2/12

(54) **VERRIEGELUNGSVORRICHTUNG FÜR EINE SCHWENKBARE RÜCKENLEHNE EINES KRAFTFAHRZEUGSITZES**
LOCKING DEVICE FOR A SWIVELLABLE BACK OF AN AUTOMOBILE SEAT
DISPOSITIF DE VERROUILLAGE POUR LE DOSSIER INCLINABLE D'UN SIEGE D'AUTOMOBILE

(30) Priorität: 11.07.1996 DE 19627853
(43) Veröffentlichungstag der Anmeldung: 17.06.1998
(73) Patentinhaber: Faurecia Autositze GmbH & Co. KG, 31655 Stadthagen (DE)
(72) Erfinder: MENGES, Wolfgang, D-59199 Bönen (DE); FALK, Dietmar, D-31655 Stadthagen (DE); ZUCH, Harald, D-30900 Wedemark (DE)
(74) Vertreter: Patentanwälte Dipl.-Ing. Bodo Thielking Dipl.-Ing. Otto Elbertzhagen
(86) Internationale Anmeldenummer: EP9703622
(87) Internationale Veröffentlichungsnummer: WO9802328

(56) Entgegenhaltungen:
- EP-A- 0 698 523
- DE-A- 3 426 265
- US-A- 4 671 571

## Beschreibung

### TECHNISCHES GEBIET

Die Erfindung betrifft eine Verriegelungsvorrichtung nach dem Oberbegriff des Anspruchs 1 oder 2.

### STAND DER TECHNIK

Eine Verriegelungsvorrichtung der als bekannt vorausgesetzten Art (DE 40 24 401 A1) ist an einer Anordnung vorgesehen, die einen Gelenkbeschlag vorsieht, der aus einem mit einem Sitzteil verbundenen festen Gelenkteil und einem mit einer Rückenlehne verbundenen schwenkbaren Gelenkteil besteht. Das mit dem Sitzteil verbundene feste Gelenkteil und das mit der Rückenlehne schwenkbare Gelenkteil sind über eine gemeinsame Schwenkachse miteinander verbunden. Das schwenkbare Gelenkteil besteht aus zwei Schwenkteilen, deren erstes als Verstellteil für eine langsame, kontinuierliche Feineinstellung einer Neigungsstellung ausgeführt ist. Das zweite Schwenkteil des verschwenkbaren Gelenkteils dient als Klappteil, das für eine Freischwenkfunktion in die Extremlagen der Rückenlehne ausgebildet ist.

Die bekannte Lösung hat den Nachteil, daß sie die Neigungsfunktion und die Verriegelungsfunktion in einem Beschlag vereinigt. In der Kraftfahrzeugindustrie ist es jedoch wünschenswert, die beiden Funktionen vollständig voneinander zu trennen, damit die Neigungsverstellbeschläge sowohl für zweitürige Fahrzeuge verwendbar sind, die eine Entriegelung der Rückenlehne benötigen, als auch für viertürige Fahrzeuge, bei denen eine Entriegelung und ein Vorklappen der Lehne nicht erforderlich ist.

Ähnliche Verriegelungsvorrichtungen sind ebenfalls bekannt (DE 44 28 715 A1). Bei diesen bekannten Verriegelungsvorrichtungen sind die Verriegelungsklinken schwenkbeweglich um Achsen gelagert, die sich quer zur Fahrtrichtung erstrecken. Dies hat zur Folge, daß sich bei den bekannten Verriegelungsvorrichtungen die Verriegelungsklinken im Crashfall wegen der auftretenden enorm hohen Beschleunigungskräfte lösen können.

Um ein solches Lösen zu vermeiden, wurde auch schon vorgeschlagen, die Verriegelungsklinken mit Hilfe von Sicherungshebeln in der Verriegelungslage zu blockieren. Abgesehen davon, daß das Vorsehen zusätzlicher Sicherungselemente wie federbelasteter Sicherungshebel derartige Beschläge aufwendiger und schwerer macht, ist auch das Vorsehen der zusätzlichen Sicherungshebel keine Garantie für eine Fixierung der Verriegelungsklinke im Crashfall, denn die Verriegelungshebel sind bei den bekannten Lösungen ebenfalls um quer zur Fahrtrichtung verlaufende Achsen schwenkbeweglich und können wegen der auftretenden hohen Beschleunigungen im Crashfall gelöst werden.

Auch bei einer weiteren bekannten Verriegelungsvorrichtung (EP-A-0 698 523) ist eine Verriegelungsklinke um eine quer zur Fahrtrichtung weisende Schwenkachse verschwenkbar gelagert. Sie dient zum Umgreifen eines Bolzens, der parallel zur Schwenkachse der Verriegelungsklinke liegt und sich ebenfalls quer zur Fahrtrichtung erstreckt. Auch diese bekannte Lösung muß die Nachteile aufweisen, die sich aus einer quer zur Fahrtrichtung erstreckenden Schwenkachse der Verriegelungsklinke ergibt: Auch bei dieser Lösung kann sich im Crashfall die Verriegelungsklinke wegen der auftretenden enorm hohen Beschleunigungskräfte lösen. Die bekannte Lösung offenbart zusätzlich noch eine Sitzschienenlängsverstellung, welche eine Verriegelungsklinke aufweist, welche um eine in Fahrtrichtung weisende Schwenkachse verschwenkbar gelagert und zum Einfallen in beabstandete Arretieröffnungen der Sitzschiene ausgebildet ist. Die Ausbildung der Verriegelung für die Sitzlängsverstellung hat keinerlei Berührungspunkte mit einer Verriegelungsvorrichtung für eine schwenkbare Rückenlehne der als bekannt vorausgesetzten Art.

### DIE ERFINDUNG

Ausgehend von diesem Stand der Technik liegt der Erfindung die Aufgabe zugrunde, eine Verriegelungsvorrichtung der als bekannt vorausgesetzten Art so auszubilden, daß sie als einfach aufgebaute Schwenkvorrichtung für klappbare Rückenlehnen ausgebildet ist und ihre Verriegelungsposition im Crashfall bei Auftreten von Kräften in und gegen die Fahrtrichtung sicher beibehält.

Die Lösung dieser Aufgabe erfolgt mit den Merkmalen des Patentanspruchs 1 oder 2.

Die Verschwenkbarkeit der Verriegelungsklinke um eine in Fahrtrichtung weisende Schwenkachse und deren Befestigung in der Art, daß die Verriegelungsklinke einerseits an einem Beschlagteil schwenkbar gelagert ist und im Eingriffszustand gleichzeitig an zwei weiteren Beschlagteilen anliegt, hat zur Folge, daß die Verriegelungsklinke einerseits ohne zusätzliche Verriegelungsmechaniken im Frontalcrashfall völlig sicher im Eingriff bleibt und daß andererseits die Verriegelungsklinke selbst sehr hoch belastbar ist. Dabei ist es möglich, daß die Verriegelungsklinke entweder an einem sitzfesten Beschlagteil oder an einem rückenlehnenfesten Beschlagteil schwenkbar angelenkt ist.

Bevorzugte weitere Ausgestaltungen der Erfindung sind in den Unteransprüchen beschrieben.

### KURZBESCHREIBUNG DER ZEICHNUNGSABBILDUNG

Nachstehend werden zwei bevorzugte Ausführungsformen der Erfindung anhand der Zeichnung im einzelnen beschrieben.

Es zeigen:
- Figur 1 -: eine Seitenansicht der Verriegelungsvorrichtung,
- Figur 2a -: einen Schnitt entlang Ebene IIa-IIa gemäß Figur 1,
- Figur 2b -: eine zu Figur 2a analoge Darstellung einer zweiten Ausführungsform,
- Figur 3 -: einen Schnitt entlang Ebene III-III gemäß Figur 1.

### BESTER WEG ZUR AUSFÜHRUNG DER ERFINDUNG

In den unterschiedlichen Ausführungsformen sind gleiche oder einander entsprechende Teile jeweils mit gleichen Bezugszeichen versehen. Sie unterscheiden sich im Bedarfsfall lediglich durch Hochstriche voneinander.

In beiden dargestellten Ausführungsformen ist eine Rastklinke 3 um eine in Fahrtrichtung verlaufende Schwenkachse 2a um einen Bolzen 2 an einem sitzfesten Beschlagteil 1 gelagert. Ein mit der Rückenlehne 10 festes Beschlagteil 7 ist um die quer zur Fahrtrichtung verlaufende Klappachse 7b in Richtung des Pfeils 7c nach vorn klappbar. An dem rükkenlehnenfesten Beschlagteil 7 sitzt ein nicht dargestellter, nur angedeuteter Neigungsverstellbeschlag 11, dessen Funktion im vorliegenden Zusammenhang unwesentlich ist. Das rückenlehnenfeste Beschlagteil 7, das in der Praxis auch als Adapter bezeichnet wird, besitzt einen Schlitz 7a, in den die Klinke 3 in Verriegelungsstellung einfallen kann.

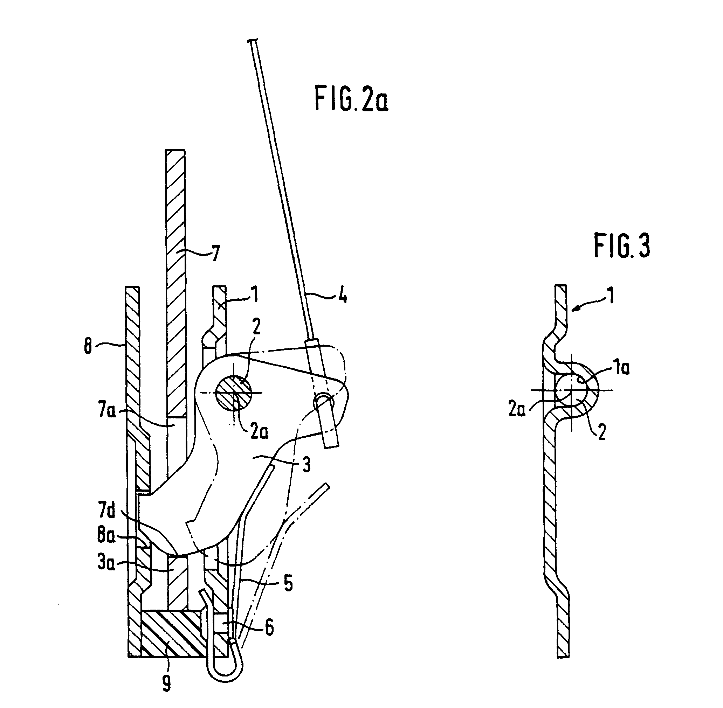

Die Klinke 3 wird von einer Feder 5, die bei der Ausführungsform gemäß Figur 2a als Biegefeder ausgebildet ist und dort von einem Niet 6 am sitzfesten Beschlagteil 1 gehalten wird, in die in Figur 2a dargestellte Verriegelungsposition gedrückt. Ein Betätigungsseil 4 dient zum Entriegeln der Verriegelungsklinke 3, die im Entriegelungszustand die strichpunktierte Position gemäß Figur 2a einnimmt. In dieser Position ist die Verriegelungsklinke vollständig aus dem Schlitz 7a des rückenlehnenfesten Teils 7 ausgetaucht mit der Folge, daß nun die Rückenlehne um die Klappachse 7b in Richtung des Pfeils 7c verschwenkt werden kann.

Die Verriegelung des rückenlehnenfesten Beschlagteils in Verriegelungslage erfolgt nicht lediglich durch Eingriff der sitzfest gelagerten Verriegelungsklinke 3 in den Verriegelungsschlitz 7a. Vielmehr erstreckt sich parallel zum sitzfesten Beschlagteil 1 ein weiterer sitzfester Beschlagbereich 8, der eine schlitzartige Ausnehmung 8a aufweist. Im verriegelten Zustand durchgreift die Verriegelungsklinke 3 nicht nur den Schlitz 7a, sondern taucht mit ihrem vorderen Ende auch in den Schlitz 8a ein. Im Crashfall wird die an den beiden sitzfesten Beschlagteilen 1 und 8 fixierte Verriegelungsklinke 3 also über den Schlitz 7a des rückenlehnenfesten Beschlagteils 7 auf Durchbiegung beansprucht.

Ein federelastisches Element 9 ist sitzfest unterhalb des rückenlehnenfesten Beschlagteils 7 angeordnet. Die Unterkante des rückenlehnenfesten Beschlagteils 7 gelangt beim Zurückklappen der Rückenlehne 10 in die Verriegelungsposition bereits kurz vor Erreichen der Verriegelungslage zur Anlage auf dem elastischen Anschlagelement 9.

Der durch die Elastizität des Anschlagelements 9 sich ergebende Federweg reicht dafür aus, daß die Verriegelungsklinke 3 mit dem Schlitz 7a fluchtet und durch den Schlitz 7a in den Schlitz 8a einfallen kann.

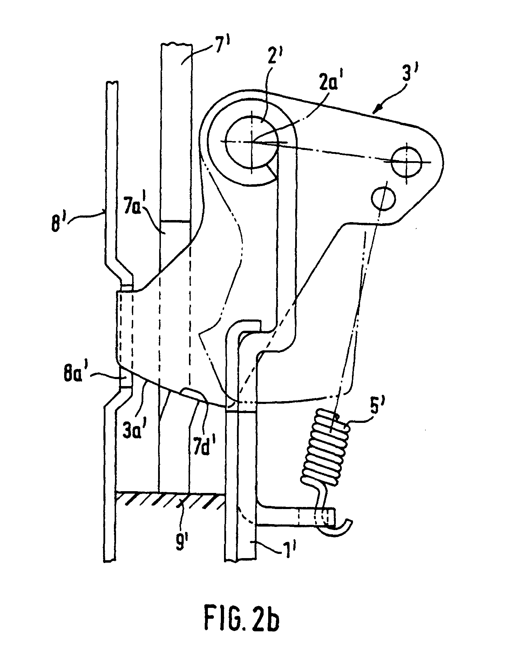

Eine ausführliche Beschreibung der Ausführungsform gemäß Figur 2b ist entbehrlich, da der prinzipielle Aufbau dieser Ausführungsform dem der Ausführungsform gemäß Figur 2a entspricht. Es entsprechen die mit Hochstrichen versehenen Bezugszeichen jeweils den Bezugszeichen ohne Hochstriche in Figur 2a. Unterschiedlich ist in erster Linie die Ausbildung des ausgestellten Auflagebereichs 7d' am unteren Ende des Schlitzes 7a'. Die Anordnung und Ausbildung des ausgestellten unteren Endbereichs 7d' ist derart gewählt, daß die gekrümmte untere Kante 3a' der Rastklinke 3' im gezeigten verriegelten Zustand flächig auf dem ausgestellten Bereich aufliegt. Statt der in Figur 2a dargestellten Biegefeder 5 ist bei dieser Lösung eine Zugfeder 5' vorgesehen.

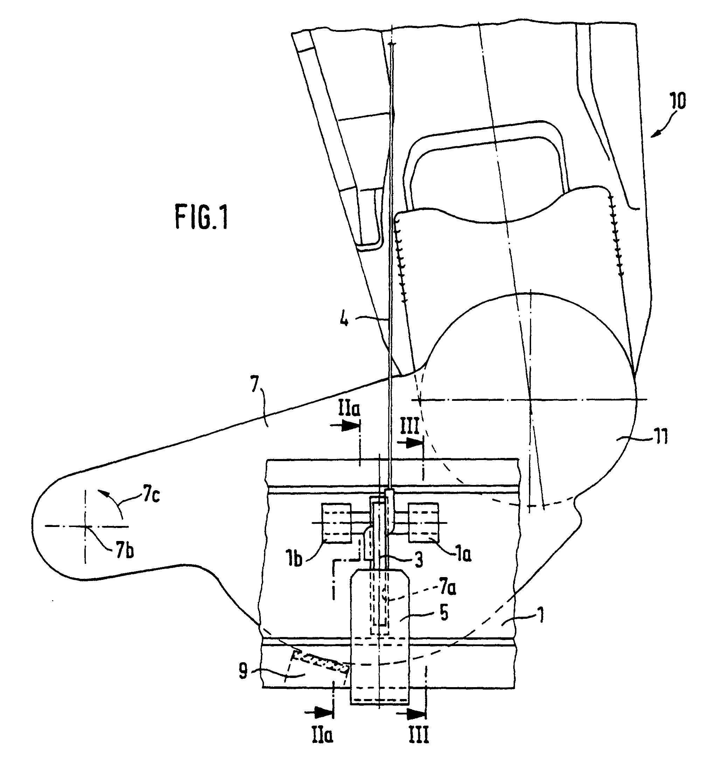

Aus Figur 1 ist ersichtlich, daß die Flanken des Verriegelungsschlitzes 7a parallel zueinander verlaufen. Dies gilt auch für die Flanken des Verriegelungsschlitzes 7a' der Ausführungsform gemäß Figur 2b. Damit die Verriegelungsklinke 3 bzw. 3' beim Zurückschwenken der Rückenlehne in die Verriegelungslage leichter in den Verriegelungsschlitz eintauchen kann, ist es möglich, die gemäß Figur 1 rechte Flanke unter einem spitzen Winkel geneigt zu der Mittelebene der Verriegelungsklinke anzuordnen, wobei der Schlitz dann am unteren Ende breiter ist als am oberen Ende.

Die spielfreie Verriegelung der Lehne wird durch das Verklemmen der gekrümmten Klemmfläche 3a bzw. 3a' auf den unteren Endbereichen 7d bzw. 7d' der Verriegelungsschlitze 7a bzw. 7a' erzeugt. Die Anlage der seitlichen Flächen der Verriegelungsklinke an die Seitenflanken der Verriegelungsschlitze erfolgt erst im Crashfall.

## Patentansprüche

1. Verriegelungsvorrichtung für eine schwenkbare Rückenlehne eines Kraftfahrzeugsitzes mit einer federbelasteten Verriegelungsklinke (3; 3'), welche zum in Verriegelungslage erfolgenden Fixieren eines rückenlehnenfesten Beschlagteils (7; 7') gegenüber einem sitzfesten Beschlagteil (1; 1') ausgebildet ist, wobei die Verriegelungsklinke (3;3') um eine in Fahrtrichtung weisende Schwenkachse (2a; 2a') verschwenkbar ist,
**dadurch gekennzeichnet**,
daß die Verriegelungsklinke (3; 3') an einem sitzfesten Beschlagteil (1; 1') angelenkt ist und auf der der Anlenkstelle der Verriegelungsklinke (3; 3') gegenüberliegenden Seite des lehnenfesten Beschlagteils (7; 7') ein sitzfester Beschlagbereich (8; 8') vorgesehen ist, der eine Ausnehmung (8a; 8a') trägt, die in Verriegelungslage mit dem Verriegelungsschlitz (7a; 7a') fluchtet, in welche (8a; 8a') die den Verriegelungsschlitz durchsetzende Verriegelungsklinke in Verriegelungslage eingreift.

2. Verriegelungsvorrichtung für eine schwenkbare Rückenlehne eines Kraftfahrzeugsitzes mit einer federbelasteten Verriegelungsklinke (3; 3'), welche zum in Verriegelungslage erfolgenden Fixieren eines rückenlehnenfesten Beschlagteils (7; 7') gegenüber einem sitzfesten Beschlagteil (1; 1') ausgebildet ist, wobei die Verriegelungsklinke (3; 3') um eine in Fahrtrichtung weisende Schwenkachse (2a; 2a') verschwenkbar ist,
**dadurch gekennzeichnet**,
daß die Verriegelungsklinke (3; 3') an einem rückenlehnenfesten Beschlagteil angelenkt ist und zu beiden Seiten des die Verriegelungsklinke (3; 3') tragenden rükkenlehnenfesten Beschlagteils (7; 7') zwei sitzfeste Beschlagteile (1; 1' und 8; 8') vorgesehen sind, wobei in den beiden sitzfesten und dem rückenlehnenfesten Teil in Verriegelungslage miteinander fluchtende Schlitze (7, 7a; 8, 8a) vorgesehen sind, und daß die Verriegelungsklinke zum Verriegeln den Schlitz im rückenlehnenfesten Beschlagteil (7; 7') durchtritt und in Verriegelungslage gleichzeitig in die beiden Schlitze (7a; 8a) des sitzfesten Beschlagteils eingreift.

3. Verriegelungsvorrichtung nach Anspruch 1 oder 2,
**dadurch gekennzeichnet**,
daß die Verriegelungsklinke (3; 3') eine in Bewegungsrichtung weisende gekrümmte Klemmfläche (3a; 3a') aufweist, die zur Auflage auf dem benachbarten Ende (7d; 7d') des Verriegelungsschlitzes (7a; 7a') ausgebildet ist.

4. Verriegelungsvorrichtung nach Anspruch 3,
**dadurch gekennzeichnet**,
daß das der Klemmfläche (3a') benachbarte Ende (7d') des Verriegelungsschlitzes (7a') einen zur flächigen Anlage der Klemmfläche (3a') ausgebildeten Verlauf aufweist.

5. Verriegelungsvorrichtung nach Anspruch 4,
**dadurch gekennzeichnet**,
daß das der Klemmfläche (3a') benachbarte Ende (7d') von einem ausgestellten Bereich des lehnenfesten Beschlagteils (7') gebildet ist.

6. Verriegelungsvorrichtung nach einem oder mehreren der Ansprüche 1 bis 4,
**dadurch gekennzeichnet**,
daß die Lagerung der Verriegelungsklinke (3; 3') von einem Lagerbolzen (2; 2') gebildet wird, der die Verriegelungsklinke (3; 3') quer durchsetzt und zu unterschiedlichen Seiten der Verriegelungsklinke (3; 3') in Durchdrückungen (1a; 1b) des die Verriegelungsklinke lagernden Beschlagteils (1) eingeschoben ist.

7. Verriegelungsvorrichtung nach einem oder mehreren der Ansprüche 1 bis 6,
**dadurch gekennzeichnet**,
daß ein lehnenfester Beschlagbereich (7; 7') unmittelbar vor Erreichen der Verriegelungslage an einen elastischen Anschlag (9; 9') anstößt.

## Claims

1. Locking device for a swivel mounted backrest of an automobile seat, with a spring-loaded locking pawl (3; 3') which is formed to fix in the locking position a fitment part (7; 7') fixed on the backrest opposite a fitment part (1; 1') fixed on the seat, wherein the locking pawl (3, 3') is capable of swivelling about a swivel axis (2a; 2a') pointing in the drive direction,
**characterised in that**
the locking pawl (3; 3') is attached for articulated movement on a fitment part (1; 1') fixed on the seat and on the side of the fitment part (7; 7') fixed on the backrest opposite the connecting point of the locking pawl (3; 3') there is a fitment area (8; 8') which is fixed on the seat and which supports a recess (8a; 8a') which in the locking position is in alignment with the locking slit (7a; 7a') in which the locking pawl which passes through the locking slit engages in the locking position.

2. Locking device for a swivel mounted backrest of an automobile seat, with a spring-loaded locking pawl (3; 3') which is formed to fix in the locking position a fitment part (7; 7') fixed on the backrest opposite a fitment part (1; 1') fixed on the seat, wherein the locking pawl (3, 3') is capable of swivelling about a swivel axis (2a; 2a') which points in the drive direction,
**characterised in that**
the locking pawl (3, 3') is attached for articulated movement on a fitment part fixed on the backrest, and on either side of the fitment part (7; 7') which is fixed on the backrest and supports the locking pawl (3, 3') there are two fitment parts (1; 1' and 8; 8') fixed on the seat wherein the two parts which are fixed on the seat and on the back rest are provided with slits (7, 7a; 8, 8a) which align with each other in the locking position, and that the locking pawl for locking purposes passes through the slit in the fitment part (7; 7') fixed on the backrest and in the locking position engages simultaneously in the two slits (7a; 8a) of the fitment part fixed on the seat.

3. Locking device according to claim 1 or 2
**characterised in that**
the locking pawl (3; 3') has a curved clamping face (3a; 3a') pointing in the direction of movement and formed to bear on the adjoining end (7d; 7d') of the locking slit (7a; 7a').

4. Locking device according to claim 3
**characterised in that**
the end (7d') of the locking slit (7a') adjoining the clamping face (3a') has a path designed to bear with a flat surface against the clamping face (3a').

5. Locking device according to claim 4
**characterised in that**
the end (7d') adjoining the clamping face (3a') is formed by a flared area of the fitment part (7') fixed on the backrest.

6. Locking device according to one or more of claims 1 to 4
**characterised in that**
the bearing of the locking pawl (3; 3') is formed by a bearing bolt (2; 2') which passes transversely through the locking pawl (3; 3') and is pushed in on different sides of the locking pawl (3; 3') into indentations (1a; 1b) of the fitment part (1) which supports the locking pawl.

7. Locking device according to one or more of claims 1 to 6
**characterised in that**
a fitment area (7; 7') fixed on the backrest abuts an elastic stop (9; 9') immediately before reaching the locking position.

## Revendications

1. Dispositif de verrouillage pour le dossier rabattable de siège de véhicule automobile comprenant un loquet de verrouillage à ressort (3; 3') qui est conçu pour bloquer, en position de verrouillage, un élément d'articulation (7; 7'), fixé au dossier, par rapport à un élément d'articulation (1; 1'), fixé au siège, le loquet de verrouillage (3; 3') pouvant pivoter autour d'un axe (2a; 2a') qui est dirigé dans le sens de la marche,
**caractérisé en ce que**
le loquet de verrouillage (3; 3') est monté, articulé, sur un élément d'articulation (1; 1') fixé au siège et qu'une zone (8; 8') de l'armature fixée au siège est prévue sur le côté de l'élément d'articulation (7; 7') opposé au point d'articulation du loquet de verrouillage (3; 3') et est pourvue d'un évidement (8a; 8a') qui coïncide avec la fente de verrouillage (7a; 7a') et dans lequel (8a; 8a') le loquet de verrouillage s'enclenche lors du verrouillage, après avoir traversé la fente (7a; 7a').

2. Dispositif de verrouillage pour un dossier rabattable de siège de véhicule automobile comprenant un loquet de verrouillage à ressort (3; 3') qui est conçu pour bloquer, en position de verrouillage, un élément d'articulation (7; 7'), fixé au dossier, par rapport à un élément d'articulation (1; 1'), fixé au siège, le loquet de verrouillage (3; 3') pouvant pivoter autour d'un axe (2a; 2a') qui est orienté dans le sens de la marche,
**caractérisé en ce que**
le loquet de verrouillage (3; 3') est monté, articulé, sur un élément d'articulation fixé au dossier et que deux éléments (1; 1' et 8; 8') fixés au siège, sont prévus des deux côtés de l'élément d'articulation (7; 7'), relié au dossier, des fentes (7, 7a; 8, 8a), qui coïncident en position de verrouillage, étant prévues dans les deux éléments reliés au siège et au dossier,
et que le loquet de verrouillage traverse la fente pratiquée dans l'élément d'articulation (7; 7') fixé au dossier et, lors du verrouillage, s'enclenche simultanément dans les deux fentes (7a; 8a) de l'élément fixé au siège.

3. Dispositif de verrouillage selon la revendication 1 ou 2,
**caractérisé en ce que**
le loquet de verrouillage (3; 3') présente une surface de blocage (3a; 3a') courbée, orientée dans le sens de la marche et conçue pour servir de butée portant contre l'extrémité voisine (7d; 7d') de la fente de verrouillage (7a; 7a').

4. Dispositif de verrouillage selon la revendication 3,
**caractérisé en ce que**
l'extrémité (7d') de la fente de verrouillage (7a') voisine de la surface de serrage (3a') est déportée en vue de l'entrée en contact avec la surface de serrage (3a').

5. Dispositif de verrouillage selon la revendication 4,
**caractérisé en ce que**
l'extrémité (7d') voisine de la surface de serrage (3a') est formée par une zone coudée de l'élément d'articulation (7') fixé au dossier.

6. Dispositif de verrouillage selon une ou plusieurs revendications 1 à 4,
**caractérisé en ce que**
le loquet de verrouillage (3; 3') est monté avec un pivot (2; 2') qui traverse le loquet de verrouillage (3; 3') et est inséré, de différents côtés du loquet de verrouillage (3; 3'), dans des passages (1a; 1b) estampés dans l'élément d'articulation (1) équipé du loquet de verrouillage.

7. Dispositif de verrouillage selon une ou plusieurs revendications 1 à 6,
**caractérisé en ce que**
la zone (7; 7') de l'élément d'articulation fixé au dossier vient porter contre une butée élastique (9; 9') juste avant d'atteindre la position de verrouillage.
